# EUROPEAN PATENT SPECIFICATION

(11) **EP 4 309 470 B1**
(45) Date of publication and mention of the grant of the patent: **07.10.2026**
(21) Application number: 22715451.5
(22) Date of filing: 17.03.2022
(51) Int. Cl.: H05B 1/02, B60S 1/02, H05B 3/84, G01S 13/931, B60R 19/48

(54) **MANAGING HEATING ELEMENT OPERATIONAL PARAMETERS**
VERWALTUNG VON HEIZELEMENTBETRIEBSPARAMETERN
GESTION DE PARAMÈTRES DE FONCTIONNEMENT D'ÉLÉMENT CHAUFFANT

(30) Priority: 19.03.2021 US 202163200644 P
(43) Date of publication of application: 24.01.2024
(73) Proprietor: Tesla, Inc., Austin, TX 78725 (US)
(72) Inventor: BHANDARI, Rishabh, Austin, Texas 78725 (US); KHANDELWAL, Sanditi, Austin, Texas 78725 (US); KONANUR, Anand S., Austin, Texas 78725 (US); ALLEY, Edward Hugh Robert, Austin, Texas 78725 (US); SHAHRIAR, Mobarrat, Austin, Texas 78725 (US); JAFRI, Mohib, Austin, Texas 78725 (US); WANG, Xufan, Austin, Texas 78725 (US); PLAVSIC, Aleksandar, Austin, Texas 78725 (US); FANG, Xue Hai, Austin, Texas 78725 (US)
(74) Representative: Liesegang, Eva
(86) International application number: PCT/US2022/020799
(87) International publication number: WO 2022/197956

(56) References cited:
- US-A1- 2004 226 939
- US-A1- 2016 052 366
- US-A1- 2017 334 397
- US-A1- 2018 202 349
- US-A1- 2018 273 198
- US-A1- 2020 163 167
- US-A1- 2020 189 531

## Description

### BACKGROUND

Generally described, a variety of vehicles, such as electric vehicles, combustion engine vehicles, hybrid vehicles, etc., can be configured with various sensors and components to facilitate operation. For example, vehicles can be configured to operate autonomously or semi-autonomously in which user input is optional, reduced or otherwise de-emphasized during travel. In such application, the operation of the vehicle may be assisted using information about the vehicle's movement and the surrounding driving environment captured by various sensors/components, such as radar detection systems, camera vision systems, ultrasonic sensors, and the like. The accuracy and consistency of the sensors/components can be impacted, however, by environmental factors that can present physical obstructions or interruptions to the operation of one or more sensors. For example, operation of a vehicle in specific colder environments may be subject to the build up of precipitation (e.g., ice or snow) in locations of the vehicle that can interfere with the operation of sensors or otherwise cause sensors to operate with reduced operational efficiency.

US 2020/163167 A1 discloses a heating apparatus of a window glass of a vehicle comprises a heater which generates heat for melting ice adhering to an imaging glass part including a whole part of a corresponding part within a window glass which corresponds to an imaging range of an onboard camera. Further prior art is known from US 2020/189531 A1, US 2016/052366 A1, US 2018/202349 A1, US 2018/273198 A1, US 2017/334397 A1, US 2004/226939 A1. US 2004/226939 A1 discloses a flexible heating foil including a flexible support layer on which at least one electrically conductive heating track is arranged between two electrodes. The two electrodes supply the heating track with current. The flexible support layer includes a woven synthetic sheet, on which the at least one heating track is arranged and has one or more slitted areas that serve as expansion joints. The flexible heating foil can be used, for example, as a seat heater in a motor vehicle.

### BRIEF DESCRIPTION OF THE DRAWINGS

Various features will now be described with reference to the following drawings. Throughout the drawings, reference numbers may be re-used to indicate correspondence between referenced elements. The drawings are provided to illustrate examples described herein.
FIG. 1 is a block diagram of a logical representative of various components of a vehicle including a control component for managing the operation of heating elements;
FIG. 2 is a flow diagram illustrative of a routine implemented by a control component for the determination of operational parameters of heating elements based on sensor inputs;
FIG. 3, is a block diagram of an embodiment of a vehicle configured with a sensor component and heater element corresponding to a forward-facing portion of a vehicle;
FIG. 4 is block diagram illustrative of a heater element having individual prongs or lines arranged in a substantially vertical orientation in accordance with an aspect of the present application;
FIG. 5 is a block diagram illustrative of a heater element having individual prongs or lines arranged in a substantially vertical orientation in accordance with an aspect of the present application;
FIG. 6 is a block diagram illustrating the logical configuration of the heater element and one or more components of a vehicle;
FIG. 7 represents a block diagram of a portion of a vehicle presenting fascia having multiple bends related to the mounting of heating elements in accordance with aspects of the present application; and
FIG. 8 is a block diagram with a representation of the slits in a heating element facilitating the adherence to bends in a fascia of a vehicle.

### DETAILED DESCRIPTION

Generally described, one or more aspects of the present disclosure relate to the configuration and management of heater elements associated with sensor components. More specifically, the invention relates to the management of the operational parameters of a heater element located proximate to one or more sensor(s) mounted on a vehicle. A control component associated with the heater element obtains a plurality of inputs associated with the operation of the vehicle, such as location, operational status of components (e.g., windshield wipers, speedometer settings, radar component operational status or accuracy or other data from the radar sensor component, etc.), ambient temperature, vision systems, and the like. In some embodiments, the vehicle may not be configured with specific temperature sensors on the sensor componentry or the heater element components, which could interfere with the operation of the sensor component or otherwise add additional costs/inefficiencies in the operation of the vehicle.

In accordance with these embodiments, the control component can utilize a body of information sources independent of any specific temperature or condition sensors on the sensor component to specify operational parameters of the heater element. More specifically, the control component may be able to utilize a lookup table, or other specification, of operational parameters for the heater element component, such as power levels, operating times or other operational parameters based on a processed set of inputs The specified operational parameters can be selected with consideration of mitigation or discouraging the build-up of frozen precipitation on portions of the vehicle approximate to the sensor components, such as fascia proximate to the sensors components, protective covers shielding the sensor components, and the like. Additionally, in some embodiments, the fascia or other coverings that may be susceptible to damage or deformation based on prolonged exposure to additional heat from the heater element. Accordingly, the specified operational parameters can further be selected or specified with consideration of mitigation or discouraging of prolonged operation of the heater element resulting in such damage. For example, the specified operational parameters can incorporate operational parameters (e.g., tolerances, material properties, material shapes, etc.) and measured performance characterization data to incorporate potential points of failure (e.g., overheating) based on operation of the heater element.

Illustratively, the control component utilizes a collection of pre-existing components, such as sensors, controllers, logic units, processors, etc. that are already installed in the vehicle and have one or more alternative functions. For example, the control component can utilize a combination of detected vehicle speed, external temperature measurements, operational status of the windshield wiper, vision system (e.g., camera inputs), location systems (e.g., GPS systems), timing information, operational status of and sensor feedback from the sensor components, etc. to determine that water may be present in the operation of the vehicle and the water may have a propensity to begin accumulating in frozen form on relevant portions of the vehicle (e.g., the fascia or covering proximate to the sensor component). In this example, the control component does not rely on any single sensor to determine the operational parameters but utilizes the combination of sensor inputs to determine the operational parameters. Illustratively, the information provided by the components can include unprocessed, or raw, information generated by a component, such as a sensor that transmits status, values, or measurement information (e.g., temperature readings).

In some embodiments, the information provided by the components can include processed information in which a controller, logic unit, processor, and the like has processed sensor information and generated additional information, such as a vision system that can utilize inputs from one or more camera sensors and provide outputs corresponding to identification of environmental conditions that promote accumulation of objects/obstructions on the fascia (e.g., a processing of raw camera image data and the generation of outputs corresponding to the processing of the raw camera image information). The camera sensor may be the sensor component that is associated with the heater element. In other embodiments, the camera sensor can be separate from the sensor components, such as for non-camera sensor components or vehicles having multiple camera sensors. Additionally, the processed information can include characterization data of the operation of the heater element that can be utilized in selecting or modifying the operational parameters as discussed herein.

In still another example, the control component can utilize additional information obtained from, or otherwise associated with, positioning systems, calendaring systems, or time-based systems. In accordance with this example, the control component may associate current or anticipated vehicle location to the propensity that specific types of precipitation may be more likely to accumulate in frozen form on relevant portions of the vehicle. In this approach, environment characteristics, such as the moisture content of precipitation (e.g., wet snow or dry snow), which can vary by geographic location, time of year, or time of day, may impact the propensity for frozen accumulation and can further change the operational parameters.

In still a further example, the historical information can be incorporated as a separate information source to the control component or be utilized to process at least some portion of the set of information sources, such as detected vehicle speed, external temperature measurements, and operational status of the windshield wiper, vision system (e.g., camera inputs), location systems (e.g., GPS systems), timing information, operational status of the radar components, etc. In this example, the control component can incorporate previously processed information and specified operational parameters as part of the determination of current operational parameters (e.g., time/distance driven since last object was sensed by the radar sensor component). The historical information can be utilized as an additional input to be considered with other information or as part of a feedback mechanism that can adjust operational parameters based on previously determined operational information.

Illustratively, the control component can utilize logic control in the form of a lookup table that can map information from information sources to operational parameters. In some embodiments, the lookup table can map individual sensor values/operational status to the determine operational parameters for the heater element, such as a sensor value/operational status that has been determined to be controlling of selection of the operational status. In other embodiments, the lookup table can combine individual sensor values/operational status to determine operation parameters. The sensor values can be specified as absolute values that are mapped in the lookup table, ranges of values, binary indications (e.g., on or off), or non-numeric categories (e.g., high, medium, or low). Still further, the lookup table can incorporate weighting values such the sensor values/operational status can have greater impact or are otherwise ordered in a manner that causes the impact of specific input information to influence the determined operational parameters.

In some embodiments, the lookup tables utilized by the control component can be specifically configured to individual vehicles. Alternatively, the lookup tables can be common to a set of vehicles, such as by vehicle type, geographic location, user type, and the like. For example, vehicles associated with the northeast region may be configured with a common table while vehicles associated with the south region may be configured with a different, common table. Still further, in other embodiments, a vehicle may be configured with a set of tables that can be applied in accordance with geographic location, user, calendar time, and the like. For example, vehicles may be configured or select different lookup tables during winter months than in summer months or spring months. The lookup tables may be statically configured with the control component, which can be periodically updated. In other embodiments, the lookup tables can be more dynamic in which the frequency of update can facilitated via communication functionality associated with the vehicle.

In some embodiments, lookup table can be configured in a programmatic implementation. Such programmatic implementations can be in the form of a sequence of decision trees or similar logic. In other embodiments, the control component may incorporate machine learning implementations that may require more refined operation of the heater element or in consideration of operational efficiencies of the heater element.

In addition to the above, one or more different aspects of the present disclosure relate to the configuration of the heater elements in accordance with the radar-based sensor(s) mounted on a vehicle in a manner to provide desired heating of the areas of the vehicle adjacent to the radar-sensor components while mitigating operational disruption to the radar- sensor component. Illustratively, the heater element can be comprised of a series of parallel (or substantially parallel) elements that operate within a field of view of the radar-sensor components. In one embodiment, the parallel lines may be in a vertical orientation. In other embodiments, the parallel lines may be in a horizontal orientation. Additionally, the configuration of the heater elements can be implemented in a manner to facilitate mounting on fascia on the vehicle that may not present a substantially flat surface proximate to radar-sensor components. More specifically, in embodiments, in which the radar-sensor components are proximate to the fascia that presents a bend, the heater element component is not mounted as a unitary solid component overlapping the radar-based sensor. One or more slits are introduced in the heater elements that extends bends in the mounting surface. The one or more slits may illustratively be in a vertical orientation, horizontal orientation, angular orientation, or combination thereof. Additionally, the individual slits that form a group of slits can be either parallel or non-parallel relative to other slits in the group of slits. Still further, the individual slits may be parallel or non-parallel relative to the heater elements. Illustratively, the number of slits and the length of individual slits are selected for conformity and processing time.

One or more different aspects of the present disclosure relate to the configuration of the heater elements in accordance with the camera-based sensor or sensors mounted on a vehicle in a manner to provide desired heating of the areas of the vehicle adjacent to the camera-based sensor components. Illustratively, the heater element can be comprised of a series of elements that operate within an area proximate to the visual coverage of the camera-based system. In this embodiment, the heater element lines are not configured as parallel lines having specific orientation. Rather, the configuration of the heater elements can be implemented in a manner to facilitate mounting on fascia/covering on the vehicle, including but limited angular patterns, circular patterns, parallel lines, and the like. Additionally, in embodiments, the heater element lines can include bends, slits or other features that facilitate adherence to the fascia or covering or ease of manufacturing.

Although the various aspects will be described in accordance with illustrative embodiments and combination of features, one skilled in the relevant art will appreciate that the examples and combination of features are illustrative in nature and should not be construed as limiting. More specifically, aspects of the present application may be applicable with various types of sensors, including the sensor components identified in illustrative examples. However, one skilled in the relevant art will appreciate that the aspects of the present application are not necessarily limited to an application to any particular sensor component or combination of sensor components in a vehicle.

With reference first to radar sensor components, car-based radio detection and ranging (RADAR) systems can be used to actively estimate range, angle, or Doppler frequency shift to environmental features by emitting radio signals and detecting returning reflected signals. Distances to radio-reflective features can be determined according to the time delay between transmission and reception. The car-based radar system can emit a signal that varies in frequency over time, such as a signal with a time-varying frequency ramp, and then relate the difference in frequency between the emitted signal and the reflected signal to a range estimate. Some systems may also estimate relative motion of reflective objects based on Doppler frequency shifts in the received reflected signals.

In some examples, directional antennas can be used for the transmission or reception of signals to associate each range estimate with a bearing. More generally, directional antennas can also be used to focus radiated energy on a given field of view of interest, such as the forward-facing, side-facing and rear-facing surfaces of the vehicle to detect objects/information. Combining the measured distances and the directional information allows for the surrounding environment features to be mapped. In other examples, non-directional antennas can be alternatively used. In these examples, a receiving antenna may have a 90-degree field of view and may be configured to utilize multiple channels with a phase offset to determine angle of arrival of the received signal. The radar sensor can thus be used, for instance, by an autonomous vehicle control system to avoid obstacles indicated by the sensor information.

Some example automotive radar systems may be configured to operate at an electromagnetic wave frequency range of 76-77 Gigahertz (GHz). These radar systems may use transmission antennas that can focus the radiated energy into tight beams in order to enable receiving antennas (e.g., having wide angle beams) in the radar system to measure an environment of the vehicle with high accuracy. The operational status and accuracy of the radar sensor can be impacted by various environmental factors encountered during the operation of the vehicle. For example, physical matter, such as mud, snow, ice, paint, etc. can impact the transmission radar signals or receipt of reflected radar signals. In the context of snow and ice, the introduction of heater elements in proximity to the radar-sensor components can improve operation of the radar-sensor components by preventing, mitigating or reducing the amount of precipitation that can accumulate on the vehicle surfaces in areas within the operation range of the radar-sensor components. Continuous or prolonged operation of the heater element can cause damage or deformation to the portions of the vehicle surface that are directly adjacent to the heater elements.

With reference now to camera-based systems, ultra-sonic systems, the above-described physical matter, e.g., mud, snow, ice, paint, fog, etc. can impact the ability for such sensor components to function or otherwise cause the sensor components to function at lower efficiency. For examples, occlusions created by physical matter on coverings associated with camera-based system can degrade the quality of images collected by the sensor components or required more complex or additional processing to mitigate the effect of the physical matter occlusion. In the same context as described above, continuous or prolonged operation of a heater element can cause damage or deformation to the portions of the vehicle surface that are directly adjacent to the heater elements, such as the coverings associated with camera-bases systems, ultrasonic sensors, and the like.

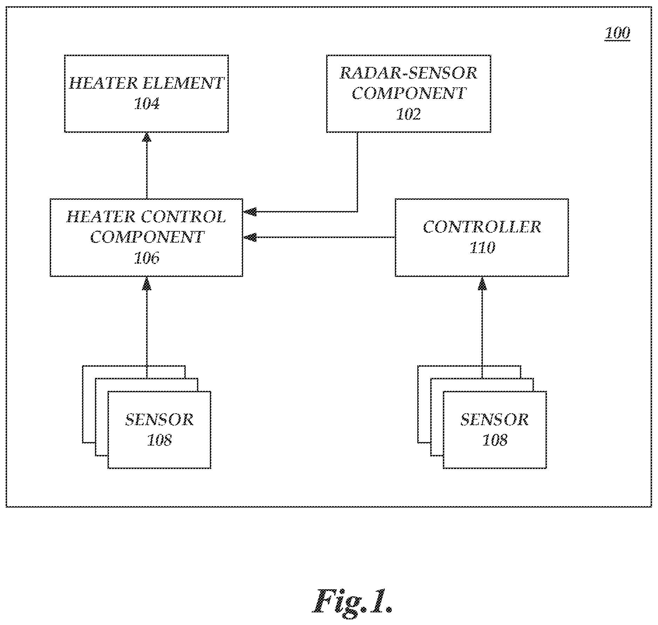

FIG. 1 is a block diagram of a logical representative of various components of a vehicle 100. As illustrated in FIG. 1, the vehicle includes one or more sensor components 102 for utilization in the operation of the vehicle. By way of nonlimiting examples, the sensor components 102 can include radar-sensor components, camera components, ultrasonic components, and the like. An individual sensor component 102 can be associated with one or more heater elements 104 that are mounted proximate to one or more sensor components to provide heating to the surfaces of the vehicle 100 proximate to the sensor components. Examples of the configuration and mounting of the heater elements 104 will be described below. Illustratively, the heater element 104 is not integrated as part of the sensor component 102 but aligned in a manner that provides heat to areas of the vehicle 100 proximate to the zone of operation of the sensor component 102 while mitigating interference with the sensor component 102. For purposes of the present application, the number of sensor components 102 or location/function within a vehicle may vary.

Individual heater elements 104 may be controlled by one or more control components 106. Control components 106 may correspond to any microcontroller-based controller, or system on a chip (SoC)-based controller or other controller. The control components 106 can include logic that facilitates the selection of operational parameters for one or more heater elements 104 and the transmission of the operational parameters via a control signal or communication protocol. Illustratively, the logic on the control components 106 receives inputs from information sources, including but not limited to, one or more sensors 108 or other controllers 110 associated with the vehicle 100. Additionally, the operational status or other sensor feedback data from the sensor component 102 can be an information source to the control component 106. Although illustrated as a stand-alone component, control component 106 may be implemented as functionality of a multi-function controller.

As described above, the sensors 106 can include hardware and software components that can obtain, generate or process a variety of operational or environment information sources that are configured in the vehicle 100 for a different purpose other than measuring temperature or ice formation related to the operation of the heater elements 104. In some embodiments, the sensors 108 can provide raw, collected data to the control components 106 as well as other controls for different functionality. In other embodiments, the controllers 110 may be associated with sensors 108 and process the raw sensor data and provide the processed data as inputs to the control components 106. By way of illustration, the information provided to control component 106 by the sensors 108, controller components 110, or other processing units can be associated with the operation of the vehicle, such as detected vehicle speed, external temperature measurements, and operational status of the windshield wiper, vision system (e.g., camera inputs), location systems (e.g., GPS systems), timing information, operational status of the radar components, etc. As also described previously, in some embodiments, the vehicle 110 is not configured with any temperature sensors on the heater elements 104 or sensor component 102, which could interfere with the operation of the sensor component 102 or otherwise add additional costs/inefficiencies in the operation of the vehicle.

The control component 106 utilizes a collective of information sources that can correspond to pre-existing sensors or components that are already installed in the vehicle 100 and have one or more alternative functions. For example, the control component 106 can utilize a combination of detected vehicle speed, external temperature measurements, time of day, processed vision system information, and weather forecast (e.g., 60% chance of snow) to determine that water may be present in the operation of the vehicle and the water may have a propensity to begin accumulated in frozen form on relevant portions of the vehicle. In this example, the control component 106 does not rely on any single sensor to determine the operational parameters but utilizes the combination of sensor inputs and processed information (e.g., vision system and weather forecast) to determine the operational parameters. Other examples and applications may be applied as well.

In another example, the control component 106 can utilize a combination of any of the above-referenced information with operational parameters associated with the sensor component 102 to determine that water may be present in the operation of the vehicle and the water may have a propensity to begin accumulated in frozen form on relevant portions of the vehicle. In this example, the operational parameters of the sensor component 102 can indicate whether the sensor component 102 have begun to experience some performance deterioration that may be further indicative of buildup of a level of frozen precipitation in combination with other sensor parameters. Such operation parameters can include operational error rates, rates of change in parameters, resource consumption (e.g., processing, power, memory, etc.), and the like. Accordingly, the selected operational parameters of the sensor component 102 may be different based on the combination of the inputted information.

Illustratively, the control component 106 can utilize a lookup table that can map information from identified sensors to operational parameters of the heater element 104. In some embodiments, the lookup table can map individual sensor values/operational status to the determine operational parameters for the heater element 104. In other embodiments, the lookup table can combine individual sensor values/operational status to determine operation parameters. The sensor values can be specified as absolute values that are mapped in the lookup table, ranges of values, binary indications (e.g., on or off), or non-numeric categories (e.g., high, medium, or low). Still further, the lookup table can incorporate weighting values such the sensor values/operational status can have greater impact.

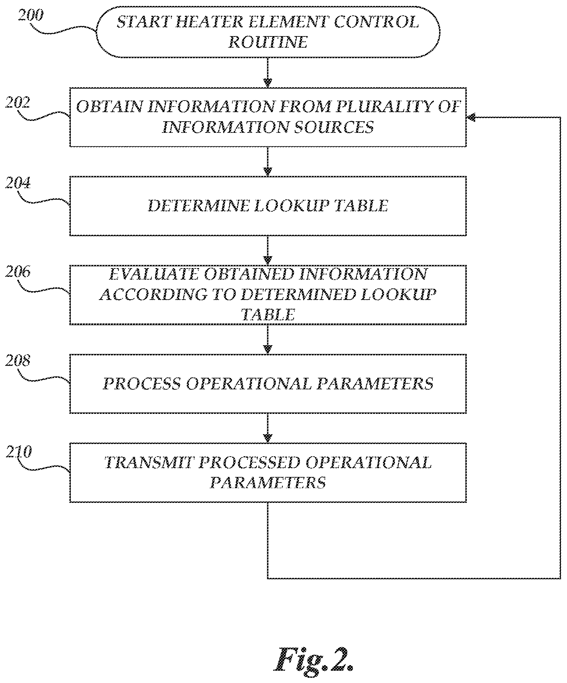

FIG. 2 is a flow diagram illustrative of a routine 200 implemented by the control components 106 for the determination of operational parameters of the heater element(s) 104. Routine 200 may be implemented for each individual radar-sensor component 102/heater element combination, such as by a control component 106 configured to determine operational parameters for the heater element 104 and generate control signals corresponding to the determined operational parameters. Alternatively, routine 200 may be implemented for a set of heater elements 104 located on a vehicle or set of vehicles. At block 202, the control component 106 obtains a set of information sources, such as from a plurality of sensors 108, controllers 110, sensor components 102, and the like. The information sources may be continuously provided to the control component 106 by individual sensors/controllers 110 or upon a synchronous, asynchronous, or random schedule and individual information sources may have different information transmission timing schedules. Still further, the transmission of data may be done in batches such that one or more sources may collect data and transmits to the control component 106 in batches or bursts of data. Alternatively, the control component 106 may periodically poll sensors/controller for inputs based on deterministic criteria, such as the satisfaction of thresholds (e.g., minimum temperature settings). In some embodiments, the sensors 108 can provide raw, collected data to the control components 106 as well as other controls for different functionality. In other embodiments, the controllers 110 may be associated with sensors 108B and process the raw sensor data and provide the processed data as inputs to the control components 106.

At block 204, the control component 106 determines an appropriate lookup table. In some embodiments, one or more lookup tables utilized by the control component 106 can be specifically configured to individual vehicles. Alternatively, the lookup tables can be common to a set of vehicles or shared by a set of vehicles, such as by vehicle type, geographic location, user type, and the like. For example, vehicles associated with the northeast region may be configured with a common table while vehicles associated with the south region may be configured with a different, common table. Still further, in other embodiments, a vehicle 100 may be configured with a set of tables that can be applied in accordance with geographic location, user, calendar time, and the like. For example, vehicles may be configured or select different lookup tables during winter months than in summer months or spring months. The lookup tables may be statically configured with the control component, which can be periodically updated. In other embodiments, the lookup tables can be more dynamic in which the frequency of update can facilitated via communication functionality associated with the vehicle. If multiple lookup tables are not provided or the control component is not otherwise configured to process selection criteria, a single lookup table can be automatically retrieved as part of the block 204.

At block 206, the control component 106 evaluates the sensor inputs to identify one or more operational parameters that may be candidate operational parameters. In some embodiments, the evaluation of the lookup table may be deterministic such that only a single operational parameter may result from evaluation of the lookup table. In other embodiments, the evaluation of the lookup table may be nondeterministic such that two or more different operational parameters (e.g., conflicting times, conflicting power levels, etc.) may result from evaluation of the lookup table.

At block 208, the control component 106 can optionally process the identified operational parameters to conduct error checking, threshold comparison, conflict resolutions, normalization, and the like. For example, the control component 106 may choose to select the lowest operational parameter if more than one operational parameter results from the lookup table evaluation. In another example, the control component 106 may choose to average operational values or other statistical processing of operational parameters. In some embodiments, the resulting operational parameter can include the indication to not operate the heater element 104 or determine to not implement an operational parameter. For example, the control component logic can include historical information that can track operation of the heater element 104 for a period of time. Evaluation of the lookup table based on ambient temperature and windshield wiper activation may indicate that the heater element 104 should typically operate for a fix period of time. In this embodiment, however, the further processing of the operational parameter may consider that the operation of the heater element 104 for the set of inputs should only occur in the event that heater element 104 has not been previously operated over a window of time or for a total time. As previously described, the control component 106 may also receive processed information regarding characterization of the properties or operation of the heater element 104. The characterization data of the operation of the heater element that can be utilized in selecting or modifying the operational parameters such as to mitigate possible overheating based on the known tolerances of the type of heater element 104, the specific shape, material and location off the heater element 104, current operating parameters of the heater element 104, and the like. Accordingly, in some embodiments, in may be possible the operational parameters selected by the control component 106 may be different based on the same (or substantially similar) input parameters.

At block 210, the control component 106 transmits information or control signals that causes the operation of the heater element 104 in accordance with the selected and processed operational parameters, including the omission of the transmission of control signals. Routine 200 returns to block 202 in embodiments for continuous monitoring or can wait for institution of the routine 200.

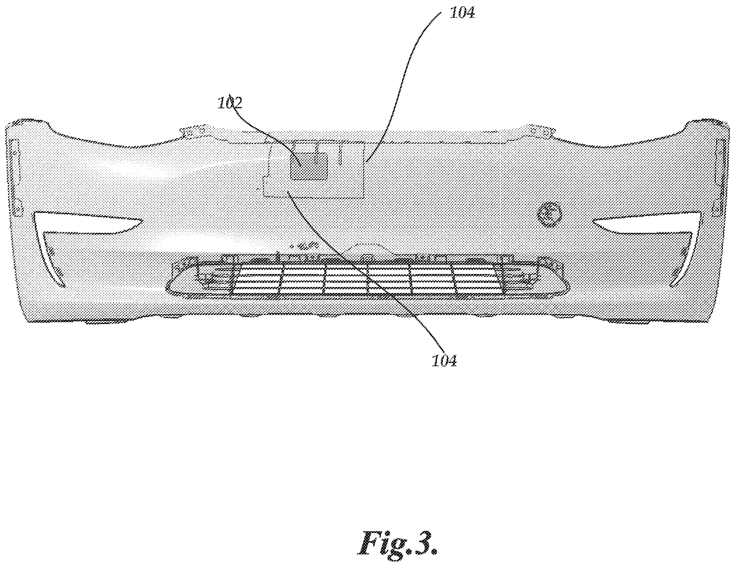

With reference now to FIG. 3, a block diagram of an embodiment of a vehicle 100 configured with a sensor component 102 and heater element 104 corresponding to a forward-facing portion of the vehicle is illustrated. The sensor component 102 can illustratively be a radar sensor component. In other embodiments, such as for sensor components 102 corresponding to camera sensors corresponding to stereoscopic vision systems, the vehicle 100 can include individual heater elements 104 for each camera sensor component. The heater elements 104 can be controlled independently or in unison.

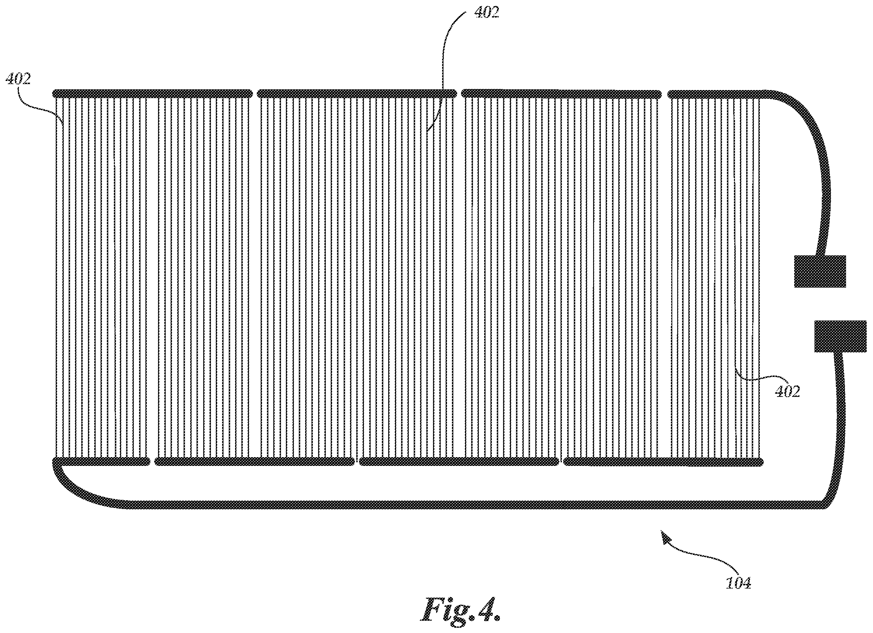

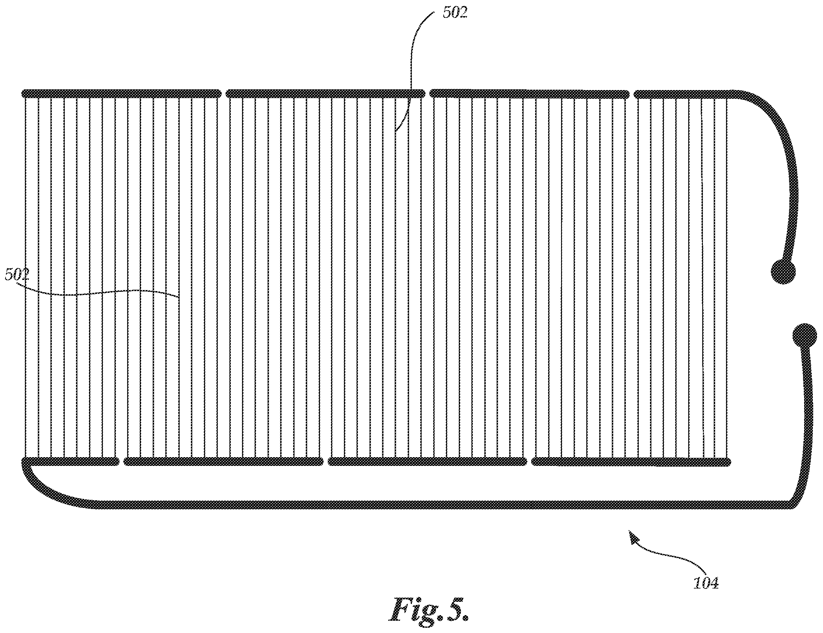

As previously described, one or more different aspects of the present disclosure relate to the configuration of the heater elements 104 in accordance with the radar-sensor components 102 mounted on a vehicle in a manner to provide desired heating while mitigating operational disruption to the radar-based sensor. FIG. 4 is block diagram illustrative of a heater element 104 having individual prongs or lines arranged in a substantially vertical orientation, such as via foil imprints or trace prints. As illustrated in FIG. 4, the gap between the individual lines 402 is relatively narrow. FIG. 5 is block diagram illustrative of an alternative heater element 104 also having individual prongs or lines arranged in a substantially vertical orientation, such as via foil imprints or trace prints. However, as illustrated in FIG. 5, the gap between the individual lines 402 is relatively large, especially in comparison with the gap of the heater element illustrated in FIG. 4. The depictions of the heater elements in FIG. 4 and FIG. 5 are illustrative in nature and should not be construed as depicting any required dimensions or configurations of the heater elements 104, such as the number or orientation of heater element lines. More specifically, in embodiments not corresponding to radar-sensor components, the configuration and orientation of the heater elements does not need to correspond to substantially parallel lines or vertical/horizontal configurations.

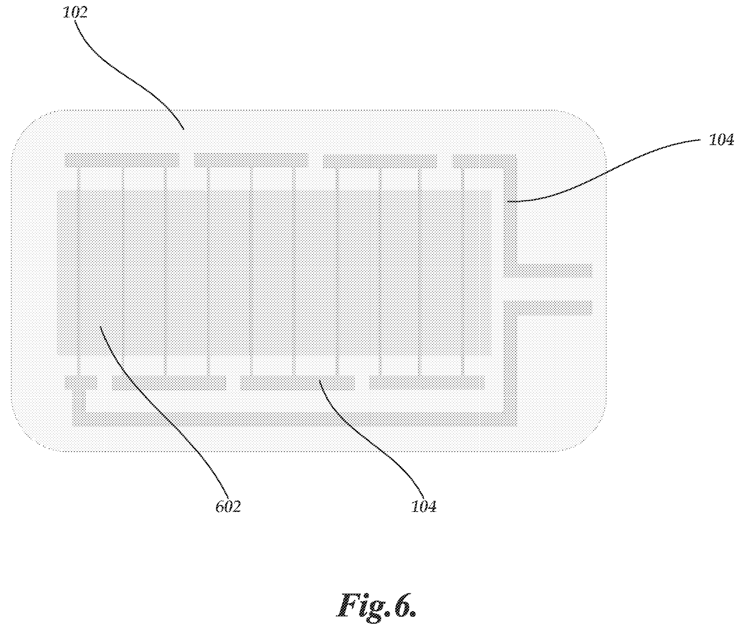

FIG. 6 is a block diagram illustrating the logical configuration of the heater element 104 and radar-sensor components 102. As illustrated in FIG. 6, the radar-sensor components 102 field of view 602 directly overlaps with the substantially parallel lines of the heating element 104. Such overlap does not disrupt the operation of the radar-sensor components 102.

Additionally, the configuration of the heater elements can be implemented in a manner to facilitate mounting on fascia on the vehicle that may not present a substantially flat surface proximate to the sensor component 102. More specifically, in embodiments, in which the sensor component 102 are proximate to the fascia or coverings that present a bend, the heater element component is not mounted as a unitary solid component overlapping the radar-based sensor. One or more slits are introduced in the heater elements that extends of bends in the mounting surface. Illustratively, the number of slits and the length of individual slits are selected for conformity and processing time.

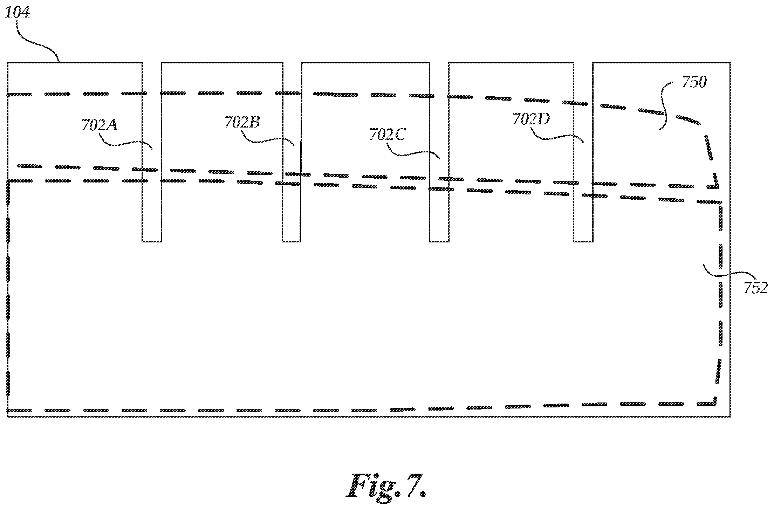

FIG. 7 represents a block diagram of a portion of a vehicle 100 according to the invention presenting fascia with a first portion 750 representing a first bend of the fascia of the vehicle and a second portion 752 representing a second bend of the fascia. The heater element 104 include four slits 702A, 702B, 702C, 702D that are configured to facilitate adherence to the first and second bent portions of the fascia of the vehicle.

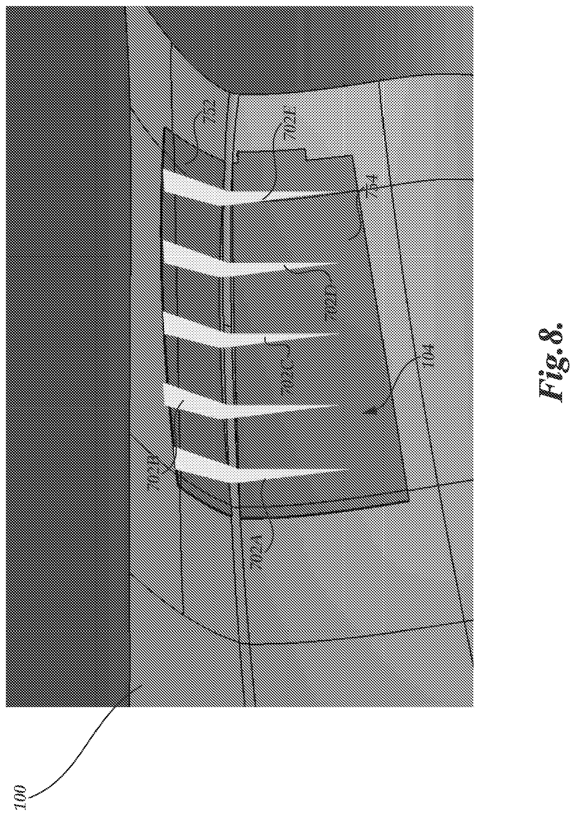

FIG. 8 is a block diagram with a representation of the slits 702 facilitating the adherence to the two bends of the fascia 752, 754. Illustratively, a length of the slit is selected sufficiently long to overlap with the first and second bend portions. The slits are not required to run the length of the heater element in some embodiments. As illustrated in FIGS. 7 and 8 the heater element includes four slits to facilitate adherence to the fascia. One skilled in the art will appreciate that the number of slits can vary include 3, 4, 5, 6, 7, 8 or any additional number of slits are considered within the scope of the present application. Although illustrated in FIGS. 7 and 8 as substantially parallel slits in a vertical orientation, the set of slits may illustratively be in a vertical orientation, horizontal orientation, angular orientation, or combination thereof. As previously discussed, the individual slits that form a group of slits can be either parallel or non-parallel relative to other slits in the group of slits. Still further, the individual slits may be parallel or non-parallel relative to the heater elements.

## Claims

1. A system for managing operation of a heating element in a vehicle (100), the system comprising
the heating element;
one or more computing devices associated with a processor and a memory for executing computer-executable instructions to implement a control component (106), wherein the control component (106) is configured to:
obtain a set of inputs from information sources including at least one of a plurality of sensors (108), a plurality of controllers (110), or a plurality of sensor components (102) associated with the vehicle (100);
identify an operational parameter lookup table for processing the set of inputs, wherein the lookup table corresponds to a mapping of at least one of individual values for the set of inputs or combinations of the set of inputs to operational parameters for a heater element, wherein the operational parameters correspond to at least one of energy level and duration;
evaluate the set of inputs to identify one or more operational parameters for the heating element (104); and
transmit control signals that causes the operation of the heating element (104) in accordance with the selected and processed operational parameters,
**characterized in that**
the heating element (104) includes a set of slits (702) to facilitate adherence of the heating element (104) to a first bend (750) of a fascia of the vehicle (100) and a second bend (752) of the fascia of the vehicle (100), wherein each of the set of slits (702) extends from the first bend (750) to the second bend (752).

2. The system as recited in Claim 1, wherein the control component (106) is further configured to process the identified operational parameters to conduct at least one of error checking, threshold comparison, conflict resolutions, or normalization.

3. The system of Claim 1, wherein evaluation of the lookup table is deterministic such that only a single operational parameter may result from evaluation of the lookup table.

4. The system of Claim 1, wherein evaluation of the lookup table is nondeterministic such that two or more different operational parameters may result from evaluation of the lookup table.

5. The system as recited in Claim 1, wherein the set of inputs include at least one operation parameter corresponding to operational error rates, rates of change in parameters or resource consumption.

6. The system as recited in Claim 1, wherein the set of inputs include at least one operational status of the vehicle (100) including detected vehicle (100) speed, external temperature measurements, and operational status of the windshield wiper and operational status of the radar components.

7. The system as recited in Claim 1, wherein the set of inputs include inputs from vision system or location systems.

8. The system as recited in Claim 1, wherein the heater element includes a series of substantially parallel elements that operate within a field of view of a radar-sensor components (102).

9. The system as recited in Claim 8, wherein the parallel lines may be in a vertical orientation.

10. A method for managing the operation of heating elements (104) physically proximate to one or more components of a vehicle (100), wherein individual heating elements (104) include a series of substantially parallel elements that operate within proximity to one or more components associated with a vehicle (100), the method comprising:
obtaining a set of inputs from information sources including at least one of a plurality of sensors (108), a plurality of controllers (110), or a plurality of sensor components (102) associated with the vehicle (100);
identifying an operational parameter lookup table for processing the set of inputs, wherein the lookup table corresponds to a mapping of at least one input from the set of inputs to operational parameters for the heater element;
evaluating the set of inputs to identify one or more operational parameters for the heating element (104); and
transmitting control signals that causes the operation of the heating element (104) in accordance with the selected and processed operational parameters,
**characterized in that**
the heating element (104) includes a set of slits (702) to facilitate adherence of the heating element (104) to a first bend (750) of a fascia of the vehicle (100) and a second bend (752) of the fascia of the vehicle (100), wherein each of the set of slits (702) extends from the first bend (750) to the second bend (752).

11. The method as recited in Claim 10 further comprising selecting a lookup table from a plurality of lookup tables.

12. The method as recited in Claim 10, wherein the operational parameters correspond to at least one of energy level and duration.

13. The method as recited in Claim 10, wherein evaluating the set of inputs to identify one or more operational parameters for the heating element (104) includes evaluating two or more inputs of the set of inputs to identify the one or more operational parameters for the heating element (104).

14. The method as recited in Claim 10, wherein the set of inputs corresponds to at least one of a plurality of controllers (110), or a plurality of sensor components (102) associated with the vehicle (100).

## Patentansprüche

1. System zum Verwalten des Betriebs eines Heizelements in einem Fahrzeug (100), das System aufweisend
das Heizelement;
eine oder mehrere Rechenvorrichtungen, die mit einem Prozessor und einem Speicher zum Ausführen computerausführbarer Anweisungen verbunden sind, um eine Steuerkomponente (106) zu implementieren, wobei die Steuerkomponente (106) zu Folgendem eingerichtet ist:
Erhalten eines Satzes von Eingängen von Informationsquellen, die mindestens eines von einer Mehrzahl von Sensoren (108), einer Mehrzahl von Steuereinheiten (110) oder einer Mehrzahl von Sensorkomponenten (102), die mit dem Fahrzeug (100) verbunden sind, enthalten;
Ermitteln einer Nachschlagetabelle für Betriebsparameter zum Verarbeiten des Satzes von Eingängen, wobei die Nachschlagetabelle einer Zuordnung mindestens eines von individuellen Werten für den Satz von Eingängen oder Kombinationen des Satzes von Eingängen zu Betriebsparametern für ein Heizelement entspricht, wobei die Betriebsparameter mindestens einem von Energieniveau und Dauer entspricht;
Bewerten des Satzes von Eingängen, um einen oder mehrere Betriebsparameter für das Heizelement (104) zu ermitteln; und
Übertragen von Steuersignalen, die den Betrieb des Heizelements (104) gemäß den ausgewählten und verarbeiteten Betriebsparametern veranlassen,
**dadurch gekennzeichnet, dass**
das Heizelement (104) einen Satz von Schlitzen (702) enthält, um die Befestigung des Heizelements (104) an einer ersten Krümmung (750) einer Verkleidung des Fahrzeugs (100) und einer zweiten Krümmung (752) der Verkleidung des Fahrzeugs (100) zu erleichtern, wobei sich jeder des Satzes von Schlitzen (702) von der ersten Krümmung (750) zur zweiten Krümmung (752) erstreckt.

2. System nach Anspruch 1, wobei die Steuerkomponente (106) ferner dazu eingerichtet ist, die ermittelten Betriebsparameter zu verarbeiten, um mindestens eines von Fehlerüberprüfung, Schwellenwertvergleich, Konfliktlösung oder Normalisierung durchzuführen.

3. System nach Anspruch 1, wobei die Bewertung der Nachschlagetabelle derart deterministisch ist, dass sich aus der Bewertung der Nachschlagetabelle nur ein einziger Betriebsparameter ergeben kann.

4. System nach Anspruch 1, wobei die Bewertung der Nachschlagetabelle derart nichtdeterministisch ist, dass sich aus der Bewertung der Nachschlagetabelle zwei oder mehr verschiedene Betriebsparameter ergeben können.

5. System nach Anspruch 1, wobei der Satz von Eingängen mindestens einen Betriebsparameter umfasst, der Betriebsfehlerraten, Änderungsraten der Parameter oder dem Ressourcenverbrauch entspricht.

6. System nach Anspruch 1, wobei der Satz von Eingängen mindestens einen Betriebszustand des Fahrzeugs (100) umfasst, der die erfasste Geschwindigkeit des Fahrzeugs (100), Außentemperaturmessungen und den Betriebszustand des Scheibenwischers sowie den Betriebszustand der Radarkomponenten umfasst.

7. System nach Anspruch 1, wobei der Satz von Eingängen Eingänge von dem Sichtsystem oder den Ortungssystemen umfasst.

8. System nach Anspruch 1, wobei das Heizelement eine Reihe von im Wesentlichen parallelen Elementen enthält, die innerhalb eines Sichtfelds von Radarsensorkomponenten (102) arbeiten.

9. System nach Anspruch 8, wobei sich die parallelen Leitungen in einer vertikalen Ausrichtung befinden können.

10. Verfahren zum Verwalten des Betriebs von Heizelementen (104), die physisch in der Nähe einer oder mehrerer Komponenten eines Fahrzeugs (100) liegen, wobei einzelne Heizelemente (104) eine Reihe von im Wesentlichen parallelen Elementen enthalten, die innerhalb der Nähe einer oder mehrerer Komponenten arbeiten, die mit einem Fahrzeug (100) verbunden sind, wobei das Verfahren Folgendes umfasst:
Erhalten eines Satzes von Eingängen von Informationsquellen, die mindestens eines von einer Mehrzahl von Sensoren (108), einer Mehrzahl von Steuereinheiten (110) oder einer Mehrzahl von Sensorkomponenten (102), die mit dem Fahrzeug (100) verbunden sind, enthalten;
Ermitteln einer Nachschlagetabelle für Betriebsparameter zum Verarbeiten des Satzes von Eingängen, wobei die Nachschlagetabelle einer Zuordnung mindestens eines von individuellen Werten für den Satz von Eingängen oder Kombinationen des Satzes von Eingängen zu Betriebsparametern für das Heizelement entspricht;
Bewerten des Satzes von Eingängen, um einen oder mehrere Betriebsparameter für das Heizelement (104) zu ermitteln; und
Übertragen von Steuersignalen, die den Betrieb des Heizelements (104) gemäß den ausgewählten und verarbeiteten Betriebsparametern veranlassen,
**dadurch gekennzeichnet, dass**
das Heizelement (104) einen Satz von Schlitzen (702) enthält, um die Befestigung des Heizelements (104) an einer ersten Krümmung (750) einer Verkleidung des Fahrzeugs (100) und einer zweiten Krümmung (752) der Verkleidung des Fahrzeugs (100) zu erleichtern, wobei sich jeder des Satzes von Schlitzen (702) von der ersten Krümmung (750) zur zweiten Krümmung (752) erstreckt.

11. Verfahren nach Anspruch 10, ferner umfassend das Auswählen einer Nachschlagetabelle aus einer Mehrzahl von Nachschlagetabellen.

12. Verfahren nach Anspruch 10, wobei die Betriebsparameter mindestens einem von Energieniveau und Dauer entsprechen.

13. Verfahren nach Anspruch 10, wobei das Bewerten des Satzes von Eingängen, um einen oder mehrere Betriebsparameter für das Heizelement (104) zu ermitteln, das Bewerten von zwei oder mehr Eingängen des Satzes von Eingängen, um den einen oder die mehreren Betriebsparameter für das Heizelement (104) zu ermitteln, umfasst.

14. Verfahren nach Anspruch 10, wobei der Satz von Eingängen mindestens einem von einer Mehrzahl von Steuereinheiten (110) oder einer Mehrzahl von Sensorkomponenten (102) entspricht, die mit dem Fahrzeug (100) verbunden sind.

## Revendications

1. Système de gestion de fonctionnement d'un élément chauffant dans un véhicule (100), le système comprenant
l'élément chauffant ;
un ou plusieurs dispositifs informatiques associés à un processeur et à une mémoire pour exécuter des instructions exécutables par ordinateur pour mettre en œuvre un composant de commande (106), dans lequel le composant de commande (106) est configuré pour :
obtenir un ensemble d'entrées en provenance de sources d'informations incluant au moins une parmi une pluralité de capteurs (108), une pluralité d'unités de commande (110), ou une pluralité de composants de capteur (102) associées au véhicule (100) ;
identifier une table de consultation de paramètres de fonctionnement pour traiter l'ensemble d'entrées, dans lequel la table de consultation correspond à un mappage d'au moins une parmi des valeurs individuelles pour l'ensemble d'entrées ou des combinaisons de l'ensemble d'entrées sur des paramètres de fonctionnement pour un élément de chauffage, dans lequel les paramètres de fonctionnement correspondent à au moins un parmi un niveau d'énergie et une durée ;
évaluer l'ensemble d'entrées pour identifier un ou plusieurs paramètres de fonctionnement pour l'élément chauffant (104) ; et
transmettre des signaux de commande qui causent le fonctionnement de l'élément chauffant (104) conformément aux paramètres de fonctionnement sélectionnés et traités,
**caractérisé en ce que**
l'élément chauffant (104) inclut un ensemble de fentes (702) pour faciliter
l'adhérence de l'élément chauffant (104) à une première courbure (750) d'un carénage du véhicule (100) et une seconde courbure (752) du carénage du véhicule (100), dans lequel chacune de l'ensemble de fentes (702) s'étend depuis la première courbure (750) jusqu'à la seconde courbure (752).

2. Système tel que décrit dans la revendication 1, dans lequel le composant de commande (106) est en outre configuré pour traiter les paramètres de fonctionnement identifiés, pour réaliser au moins un parmi un contrôle d'erreur, une comparaison de seuil, des résolutions de conflit, ou une normalisation.

3. Système de la revendication 1, dans lequel l'évaluation de la table de consultation est déterministique de manière telle que seulement un seul paramètre de fonctionnement peut résulter de l'évaluation de la table de consultation.

4. Système de la revendication 1, dans lequel l'évaluation de la table de consultation est non déterministique de manière telle que deux ou plus de deux paramètres de fonctionnement différents peuvent résulter de l'évaluation de la table de consultation.

5. Système tel que décrit dans la revendication 1, dans lequel l'ensemble d'entrées incluent au moins un paramètre de fonctionnement correspondant à des taux d'erreur de fonctionnement, des taux de changement de paramètre, ou une consommation de ressources.

6. Système tel que décrit dans la revendication 1, dans lequel l'ensemble d'entrées incluent au moins un état de fonctionnement du véhicule (100) incluant une vitesse détectée du véhicule (100), des mesures de température externe, et un état de fonctionnement de l'essuie-glace, et un état de fonctionnement des composants radar.

7. Système tel que décrit dans la revendication 1, dans lequel l'ensemble d'entrées incluent des entrées provenant d'un système de vision ou de systèmes de localisation.

8. Système tel que décrit dans la revendication 1, dans lequel l'élément de chauffage inclut une série d'éléments sensiblement parallèles qui fonctionnent dans les limites d'un champ de vue de composants de capteur radar (102).

9. Système tel que décrit dans la revendication 8, dans lequel les lignes parallèles peuvent être dans une orientation verticale.

10. Procédé de gestion de fonctionnement d'éléments chauffants (104) physiquement à proximité d'un ou de plusieurs composants d'un véhicule (100), dans lequel des éléments chauffants individuels (104) incluent une série d'éléments sensiblement parallèles qui fonctionnent dans les limites d'une proximité à un ou à plusieurs composants associés à un véhicule (100), le procédé comprenant :
l'obtention d'un ensemble d'entrées en provenance de sources d'informations incluant au moins une parmi une pluralité de capteurs (108), une pluralité d'unités de commande (110), ou une pluralité de composants de capteur (102) associées au véhicule (100) ;
l'identification d'une table de consultation de paramètres de fonctionnement pour traiter l'ensemble d'entrées, dans lequel la table de consultation correspond à un mappage d'au moins une entrée provenant de l'ensemble d'entrées sur des paramètres de fonctionnement pour l'élément de chauffage ;
l'évaluation de l'ensemble d'entrées pour identifier un ou plusieurs paramètres de fonctionnement pour l'élément chauffant (104) ; et
la transmission de signaux de commande qui causent le fonctionnement de l'élément chauffant (104) conformément aux paramètres de fonctionnement sélectionnés et traités,
**caractérisé en ce que**
l'élément chauffant (104) inclut un ensemble de fentes (702) pour faciliter l'adhérence de l'élément chauffant (104) à une première courbure (750) d'un carénage du véhicule (100) et une seconde courbure (752) du carénage du véhicule (100), dans lequel chacune de l'ensemble de fentes (702) s'étend depuis la première courbure (750) jusqu'à la seconde courbure (752).

11. Procédé tel que décrit dans la revendication 10 comprenant en outre la sélection d'une table de consultation parmi une pluralité de tables de consultation.

12. Procédé tel que décrit dans la revendication 10, dans lequel les paramètres de fonctionnement correspondent à au moins un parmi un niveau d'énergie et une durée.

13. Procédé tel que décrit dans la revendication 10, dans lequel l'évaluation de l'ensemble d'entrées pour identifier un ou plusieurs paramètres de fonctionnement pour l'élément chauffant (104) inclut l'évaluation de deux ou de plus de deux entrées de l'ensemble d'entrées pour identifier l'un ou les plusieurs paramètres de fonctionnement pour l'élément chauffant (104).

14. Procédé tel que décrit dans la revendication 10, dans lequel l'ensemble d'entrées correspond à au moins une parmi une pluralité d'unités de commande (110), ou une pluralité de composants de capteur (102) associées au véhicule (100).
